# EUROPEAN PATENT APPLICATION

(11) **EP 0 980 174 A2**
(43) Date of publication of application: **16.02.2000**
(21) Application number: 98204023.0
(22) Date of filing: 27.11.1998
(51) Int. Cl.: H04M 1/05, H04M 1/60

(54) **Integrated protective helmet for handsfree use of a mobile telephone in a car**

(30) Priority: 19.05.1998 IT MI981089
(71) Applicant: Blu s.r.l., 20121 Milano (IT)
(72) Inventor: Descrovi, Aldo, 24030 Mozzo, Bergamo (IT)
(74) Representative: Marchi, Massimo

(57) **Abstract**

A protective helmet (1000; 2000) for drivers of vehicles, comprising a shell (10; 100), an internal padding (600), a loudspeaker (1), a microphone (50) and a circuit (30) connecting together said loudspeaker (1) and said microphone (50), in which said loudspeaker (1), said microphone (50) and said connection circuit (30) are structurally joined to said helmet (1000; 2000) and said connection circuit (30) can be connected to a cellular telephone so as to be used by said driver.

## Description

The present invention relates to a protective helmet for drivers of vehicles, provided with a device for transmission and/or reception of signals by means of a cellular phone.

Helmets equipped for communication between driver and passenger travelling in or on the same vehicle are known. These helmets are provided with a device comprising a microphone, a loudspeaker, an electronic amplification circuit and a cable for connection between the helmets of the users.

Helmets provided with systems for reception and/or transmission via radio from and/or to fixed or movable locations are also known.

None of the abovementioned helmets, however, allow signals to be received and/or transmitted via mobile or cellular telephone equipment.

Devices which allow a user to receive signals directly from a cellular phone without having to perform any manual operation are also known. Said devices are commonly known as "hands-free" kits. A first type of hands-free kit, which is generally used by pedestrians, consists of earphones, an upper support band to which a movable arm supporting the microphone is connected, a cable and an adaptor plug which is connected to the cellular phone. A second type of hands-free kit, on the other hand, consists of earphones, a cable for connection to the telephone and, along the cable, a microphone which can be fixed by means of a clip to the user's jacket. In turn, a hands-free kit generally used in motor vehicles consists of a fixed base connected electrically to a microphone and to a loudspeaker, an audio amplifier powered by the motor vehicle battery and an adaptor connected to the cellular telephone. Since cellular telephones are more and more frequently equipped with circuitry and software which activate them in an automatic manner after a predetermined number of rings, the abovementioned kits allow a pedestrian or a motor vehicle driver to answer a telephone call via a cellular phone while performing an activity which involves use of both hands, such as, for example, certain types of sports or driving of a motor vehicle.

The inventor of the present invention has realized that none of the abovementioned kits is used by drivers of vehicles who wear a helmet and, in particular, by motorcyclists, since they do not guarantee adequate reception in the presence of external noise. Moreover, they are too bulky and/or dangerous for the driver. In fact, the microphones and the earphones of many of the abovementioned kits cannot be fitted underneath a helmet, but, even when they are small enough to be fitted there, the helmet exerts such a pressure on them as to make them dangerous for whoever wears them. This is particularly true of the earphones.

According to a first aspect thereof, the present invention relates to a protective helmet for drivers of vehicles, comprising a shell, an internal padding, a loudspeaker, a microphone and a circuit connecting together said loudspeaker and said microphone, characterized in that said loudspeaker, said microphone and said connection circuit are structurally joined to said helmet and said connection circuit may be connected to a cellular telephone so as to be used by said driver.

Preferably, said loudspeaker, said microphone and said connection circuit are structurally joined to said helmet in a stable manner.

More preferably, said internal padding comprises a seat for housing said loudspeaker.

Even more preferably, said internal padding and said shell have a through-opening towards the outside for an electric cable which electrically connects said loudspeaker, housed in said seat, to said connection circuit.

According to one embodiment, said shell comprises a chin-piece with a suitable seat, formed in said internal padding, for housing said microphone.

Preferably, said internal padding also comprises a through-opening for an electric cable connecting together said microphone and said connection circuit.

Characteristic features and advantages of the invention will now be illustrated with reference to embodiments shown by way of a non-limiting example in the accompanying drawings, in which:
- Fig. 1 is a perspective view of a first embodiment of a helmet according to the invention;
- Fig. 2 is an exploded view of a casing for a circuit connecting together a microphone, a loudspeaker and a cellular telephone of a reception/transmission device of the helmet according to Fig. 1;
- Fig. 3 is a partial cross-sectional view of the helmet according to Fig. 1;
- Fig. 4 is a perspective view of a second embodiment of a helmet according to the invention.

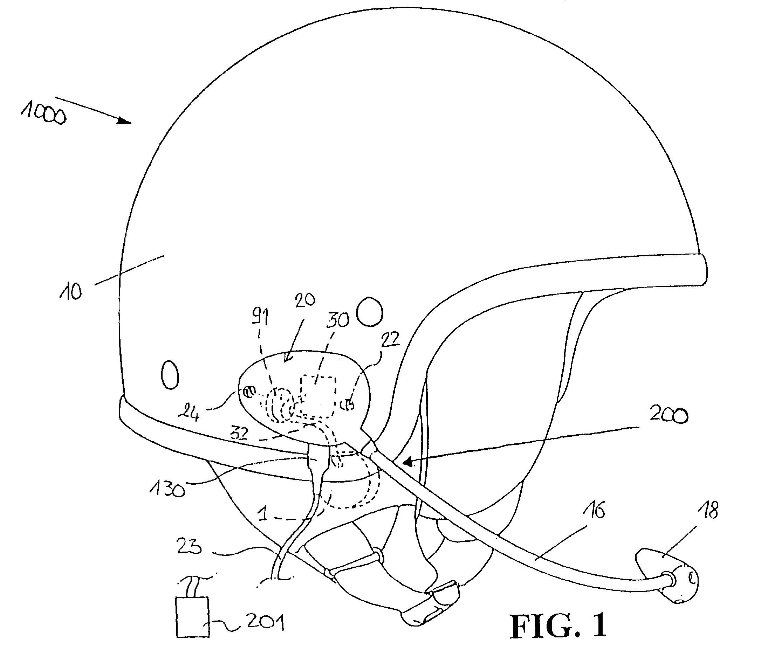

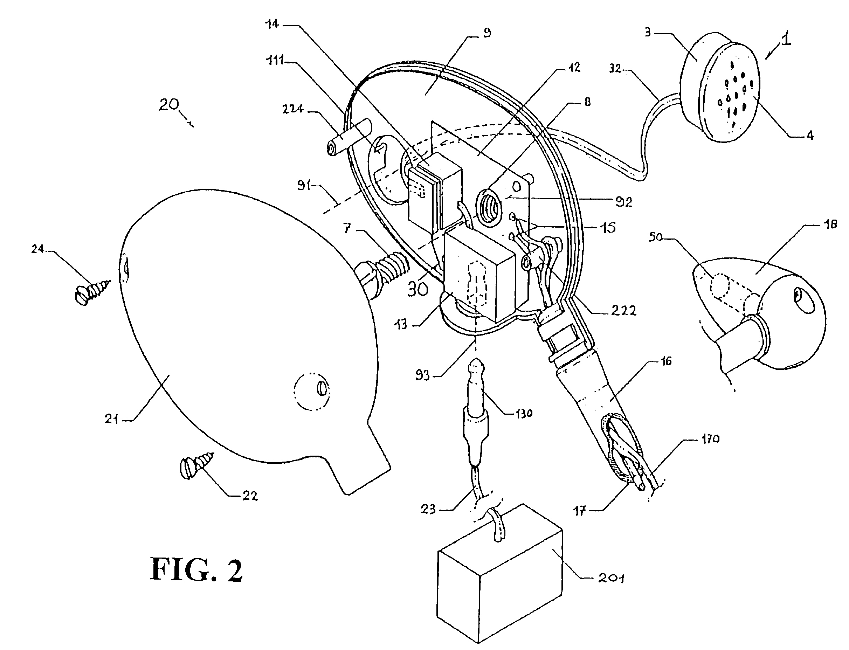

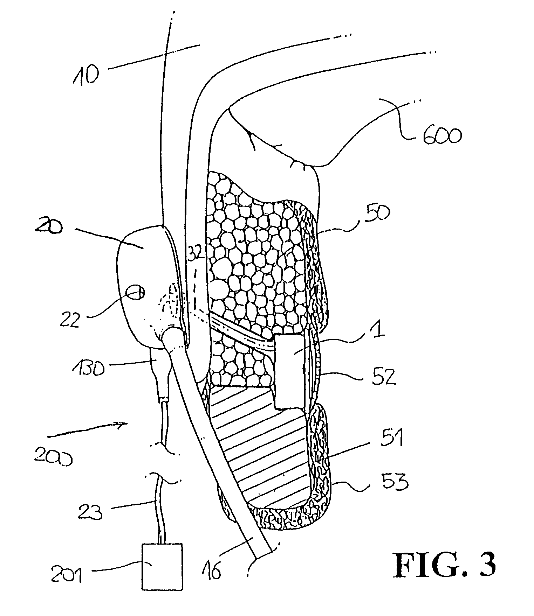

As shown in Figures 1 to 3, according to a first embodiment, the helmet 1000 of the invention comprises a open-face helmet 10 and a reception/transmission device 200 which can be connected to a mobile or cellular telephone.

Said device 200, in turn, comprises a loudspeaker 1, a casing 20 for a connection circuit 30 and a rod 16 which connects the casing 20 to a unit 18 containing a microphone 50.

The shell 10 consists of a body made of polycarbonate or a composite material and is provided with an internal padding 600 comprising an impact-absorbing material 50. Preferably, the material 50 consists of expanded polystyrene and is partially covered by a padding 51 of expanded polyurethane which, in turn, is lined with a thin meshwork of synthetic material such as, for example, polyester 53.

A seat 5 is formed in the material 50 which absorbs the impacts of the padding 600, at the point where the ear of the user of the helmet 1000 is located, so as to house, for example, the loudspeaker 1 by means of an interlocking fit. Since said padding 51 is acoustically insulating, the lining of said padding 51 is interrupted in the region of the seat 5, and the loudspeaker 1 is lined only with a fine perforated meshwork 52 so as to reduce to a minimum the sound absorption. Moreover, in order to allow improved reception and better insulation from external noises, the loudspeaker 1 is preferably provided with a sealing ring (not shown) made of anti-allergic synthetic foam.

Preferably the loudspeaker 1 is of the high-efficiency type, for example, pneumatic suspension or piezoelectric type, and is seated in a protective plastic housing formed by two shells 3 and 4 which are fixed together.

According to a variant, two loudspeakers may also be provided in the helmet 1000, i.e. one for each ear.

The impact-absorbing material 50 and the shell 10 have a through-opening towards the outside for an electric cable 32 which, by means of a female plug 2 (not shown), which is preferably miniaturised, or, for example, a welding contact, electrically connects the loudspeaker 1 to the connection circuit 30.

In turn, the connection circuit 30 electrically connects together the loudspeaker 1, the cellular telephone and the microphone 50.

In fact, the connection circuit 30 comprises a terminal board 12, for example made of vetronite™, onto which a two-pole male plug 14, a female connector 13 of the jack type with, for example, a diameter of about 2.5 mm and two welding contacts 15 are suitably fixed. The two-pole male plug 14 allows connection of the female plug 2 of the loudspeaker 1, the connector 13 allows connection of the cellular phone and, finally, the two welding contacts 15 are welded to an electric cable 170 for connection to the microphone 50.

The casing 20, which is typically plastic and preferably has an oval shape to avoid aerodynamic noise, consists of a first portion 9, onto which the terminal board 12 is fixed, and a second portion 21. The first portion 9 has two internally threaded pins 222 and 224 for two screws 22 and 24 which allow assembly of the second portion 21 onto the first portion 9. A suitable watertight seal (not shown) allows, moreover, the connection circuit 30 to be protected inside the casing 20 from atmospheric agents.

The first portion 9 also has three holes 91, 92 and 93: the first hole 91 for allowing through the electric wire 32 for connection to the loudspeaker 1, and the second hole 92 for a screw 7 which, engaging with a threaded bush 8, typically made of metal, provided in the outside wall of the shell 10, allows fixing of the casing 20 onto the shell 10. In turn, the third hole 93 allows, via the connector 13, connection of the cellular telephone.

Moreover, suitable stops 111 projecting from the hole 91 engage, for example, with suitable recesses (not shown) formed on the external surface of the shell 10 in order to hold firmly in position, also during high-speed travel, the casing 20, thus preventing it from rotating about the screw 7.

The front part of the casing 20 has a seat for engagement with one end of the rod 16. The latter consists of semi-rigid material, for example, a small polythene tube which can be bent and oriented by means of a soft-copper wire 17 of suitable thickness which runs inside it together with the electric cable 170. The other end of the rod 16 has an articulated joint with a stop (not shown), which allows the unit 18, connected thereto, freedom of movement through an angle of no more than about ±30° so as to avoid any breakage of the electric cable 170.

The unit 18 consists of two parts which are interlocked or bonded together and, in order to avoid aerodynamic noise, has an oval shape and is preferably provided, at the front, with a covering of sound-proofing material (for example, open-cell expanded polyurethane).

Preferably the microphone 50 contained in the unit 18 is of the directional type, namely is capable of intercepting selectively the sounds coming from the user's mouth, thus limiting the interference caused by external noise.

At the time of use, the cellular telephone is connected to the device 200 by means of a three-pole cable 23. One end of this cable 23 is provided, in fact, with a first male connector 130 of the jack type for connection to the female connector 13 of the device 200, while the other end is provided with a second male connector of the jack type (not shown) for connection to an adaptor 201 which has a specific pin arrangement for each type of cellular telephone used. Preferably said second connector is of the extractable type so as to prevent the three-pole cable 23 from being pulled with excessive force when, by mistake, the user removes the helmet without first of all disconnecting the three-pole cable 23 from the telephone. Moreover, in order to reduce the volume occupied by the cable and avoid any breakages due to pulling, the three-pole cable 23 is preferably of the spiral type.

According to a variant, in the case where a more powerful loudspeaker is required, the device 200 may also comprise an amplifier for amplifying the sound signal emitted by the loudspeaker 1.

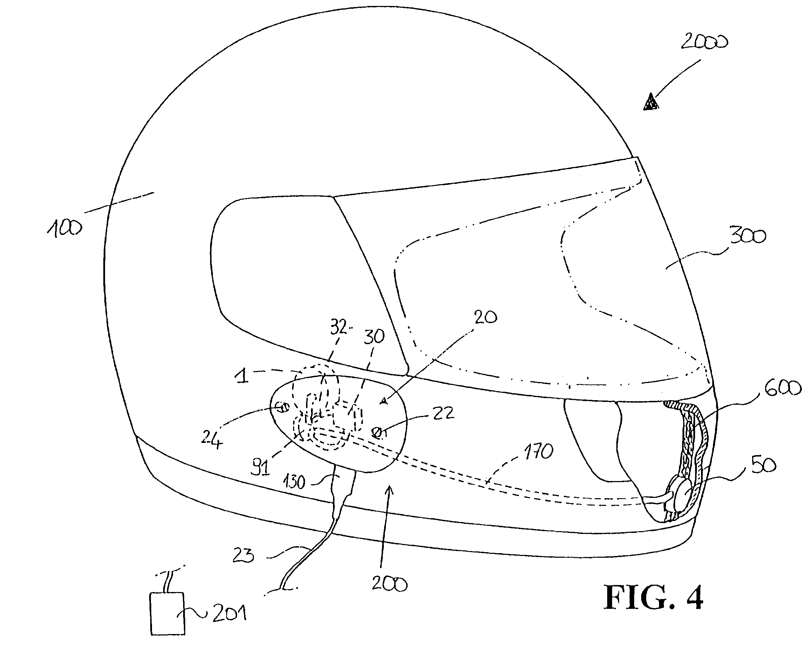

According to the second embodiment shown in Fig. 4, a helmet 2000 according to the invention comprises a shell 100 of the full-face type, a visor 300 and a device 200, such as that described above, for transmitting and/or receiving signals by means of a cellular telephone. In this case, the microphone 50 will be positioned in a suitable seat formed in the internal padding 600 of the chin-piece of the helmet 2000, opposite the location of user's mouth, and the electric cable 170 connecting together the microphone 50 and the connection circuit 30 will be suitably inserted inside a suitable passage formed in the padding 600 of the helmet 2000.

## Claims

1. A protective helmet (1000; 2000) for drivers of vehicles, comprising a shell (10; 100), an internal padding (600), a loudspeaker (1), a microphone (50) and a circuit (30) connecting together said loudspeaker (1) and said microphone (50), characterized in that said loudspeaker (1), said microphone (50) and said connection circuit (30) are structurally joined to said helmet (1000; 2000) and said connection circuit (30) may be connected to a cellular telephone so as to be used by said driver.

2. A helmet (1000; 2000) according to Claim 1, characterized in that said loudspeaker (1), said microphone (50) and said connection circuit (30) are structurally joined to said helmet (1000; 2000) in a stable manner.

3. A helmet (1000; 2000) according to Claim 1 or 2, characterized in that said internal padding (600) comprises a seat (5) for housing said loudspeaker (1).

4. A helmet (1000; 2000) according to Claim 3, characterized in that said internal padding (600) and said shell (10; 100) have a through-opening towards the outside for an electric cable (31) which electrically connects said loudspeaker (1), housed in said seat (5), to said connection circuit (30).

5. A helmet (2000) according to any one of Claims 1 to 4, characterized in that said shell (100) comprises a chin-piece with a suitable seat, formed in said internal padding (600), for housing said microphone (50).

6. A helmet (2000) according to Claim 5, characterized in that said internal padding (600) also comprises a through-opening for an electric cable (170) connecting together said microphone (50) and said connection circuit (30).
